(19)

Europäisches
Patentamt
European
Patent Office
Office européen
des brevets

(11)    **EP 4 322 354 B1**

(12)    **EUROPEAN PATENT SPECIFICATION**

(45) Date of publication and mention
of the grant of the patent:
**09.04.2025 Bulletin 2025/15**

(51) International Patent Classification (IPC):
**H02H 3/26** (2006.01)    **H02H 7/26** (2006.01)

(21) Application number: **22189895.0**

(22) Date of filing: **11.08.2022**

(52) Cooperative Patent Classification (CPC):
**H02H 3/26; H02H 7/261**

(54)    **A METHOD AND APPARATUS FOR DIFFERENTIAL PROTECTION OF A THREE-PHASE ELECTRIC CONNECTION**

VERFAHREN UND VORRICHTUNG ZUM DIFFERENTIELLEN SCHUTZ EINER DREIPHASIGEN ELEKTRISCHEN VERBINDUNG

PROCÉDÉ ET APPAREIL DE PROTECTION DIFFÉRENTIELLE D'UNE CONNEXION ÉLECTRIQUE TRIPHASÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.02.2024 Bulletin 2024/07**

(73) Proprietor: **ABB Schweiz AG**
**5400 Baden (CH)**

(72) Inventors:
• **Wahlroos, Ari**
**65320 Vaasa (FI)**
• **Altonen, Janne**
**33720 Tampere (FI)**
• **Hiitelä, Kai**
**33720 Tampere (FI)**

(74) Representative: **Kolster Oy Ab**
**Salmisaarenaukio 1**
**P.O. Box 204**
**00181 Helsinki (FI)**

(56) References cited:
**EP-A1- 2 088 659    CN-A- 101 478 147**
**JP-A- S57 142 119    JP-A- S57 148 521**

**Description**

FIELD

The present invention relates to a differential protection of a three-phase electric connection of a three-phase electric network.

BACKGROUND

In principal differential current protection may be based on comparing measured currents from the ends of an electric connection, such as an electric line, regarding both the magnitude and the phase angle. For the operation there thus needs to be an interconnecting communication channel between the line end relays, over which the interchange of current information can be transferred, for example. According to Kirchhoff's law, when the vector sum of such currents measured at the ends of the electric connection differs from zero, it indicates a fault in the electric connection. Such differential current protection is one of the simplest forms of line protection typically requiring only few settings to be entered regarding the characteristic of the protected line, for instance.

The line differential current protection may be implemented according to the phase segregated or the combined sequence principle, for example. In the phase segregated scheme differential current protective functions can be implemented on per phase-current basis. The phase current differential computations can determine whether a fault has occurred and identify which phase or phases are involved in the fault, for instance. In the combined sequence scheme, to reduce the communication capacity requirements while maintaining adequate operation speed and reliability of operation, only one single signal instead of all three phase currents may be interchanged between the line ends. This signal can be a proper combination of the line positive-sequence, negative-sequence and zero-sequence currents. The differential current computations may then be based on such a combined sequence current signal, for instance.

The basic principle of the phase segregated scheme may be that the differential (operate) quantity in the current differential function is the magnitude of the phasor summation of the local and remote phase currents. Thus, the operate quantity can be equal to the total fault currents for internal faults and essentially equal to zero (neglecting line distributed capacitance charging currents) for external faults. For phase A of a three-phase electric line the following equation can be written:

$$I_{OP\_PhA} = \left| \bar{I}_{PhA}^{Local} + \bar{I}_{PhA}^{Remote} \right| \qquad (eq1)$$

The scheme should preferably be restrained so that certain level of apparent operate current resulting from, e.g. current transformer and/or other measuring errors that may be proportional to the magnitude of the measured phase currents can be allowed without the risk of false operation, for example. The restraint (stabilizing) current for phase A can be calculated, for example, as:

$$I_{RES\_PhA} = \frac{\left| \bar{I}_{PhA}^{Local} \right| + \left| \bar{I}_{PhA}^{Remote} \right|}{2} \qquad (eq2)$$

where

$\bar{I}_{PhA}^{Local}$ is the local end phasor representing phase current A, and

$\bar{I}_{PhA}^{Remote}$ is the remote end phasor representing phase current A.

Equations 1 and 2 assume positive current flow towards the line in both line ends. Similar equations apply for phases B and C of the three-phase electric line.

The differential scheme can also be based on the combined sequence current, which is a weighted sum of phase A symmetrical component currents. $\bar{I}_T$ represents this combined current and let $C_1$, $C_2$ and $C_0$ represent the weighting coefficients for the positive-, negative-, and zero-sequence components, for example, then $\bar{I}_T$ can be described as:

$$\bar{I}_T = C_1 \cdot \bar{I}_1 + C_2 \cdot \bar{I}_2 + C_0 \cdot \bar{I}_0 \qquad (eq3)$$

where $\bar{I}_1$, $\bar{I}_2$ and $\bar{I}_0$ represent phase A positive-sequence, negative-sequence, and zero-sequence currents, respectively.

For the combined sequence scheme, the operate and restraint currents can be written in a way similar to the above according to the following equations:

$$I_{OP\_T} = \left| \bar{I}_T^{Local} + \bar{I}_T^{Remote} \right| \qquad (eq4)$$

$$I_{RES\_T} = \frac{\left| \bar{I}_T^{Local} \right| + \left| \bar{I}_T^{Remote} \right|}{2} \qquad (eq5)$$

where

$\bar{I}_T^{Local}$ is the local end phasor representing the combined sequence current, and

$\bar{I}_T^{Remote}$ is the remote end phasor representing the combined sequence current.

The operating principle in the simplest form is given by Equation 6 as follows:

$$I_{OP} > s \cdot I_{RES} + I_B \qquad (eq6)$$

where

$I_{OP}$ is the calculated operate current,
$I_{RES}$ is the calculated restraint current,
$s$ is the characteristic slope setting, and
$I_B$ is the basic start current threshold setting.

The operating criterion may thus state that the higher the restraint current is, the higher operate current threshold is required to operate the relay or protective equipment in general. The correspondence between these two current quantities may be given by the slope setting s.

In general, the limit of sensitivity of such schemes may be dictated by the amplitude of the charging current of the protected line, for example. This charging current is due to the distributed capacitances (phase-to-phase and phase-to-earth capacitances) of the protected electric line and can be seen as an apparent differential current by the relay. Exact value of capacitance may depend on the structures and geometry of the electric line, such as an overhead line or a cable or a combination thereof. As an example, the capacitance of an overhead line is determined by the total length of the line, conductor size, and the spacing between conductors and ground. For a cable, the capacitance is typically much higher than for an overhead line with the same length. This is because the permittivity of the dielectric around the conductors is generally two to four times the dielectric constant of air. In addition, the spacing between a cable conductor and ground is usually much smaller than that of an overhead line. The charging current for a line can be calculated as follows:

$$I_{CHARGE} = 2\pi \cdot f_n \cdot (C_s + 3 \cdot C_c) \cdot \frac{U_{pp}}{\sqrt{3}} \qquad (eq7a)$$

where $C_s$ is the line phase-to-earth capacitance [F] (per phase),
$C_c$ is the line phase-to-phase capacitance [F] (per phase),
$f_n$ is the system nominal frequency [Hz], and
$U_{pp}$ is the system phase-to-phase voltage [V].

The line phase-to-earth and phase-to-phase capacitances can be calculated based on the line positive- and zero-sequence capacitances as follows:

$$C_s = (2 \cdot C_1 + C_0)/3 \qquad (eq7b)$$

$$C_c = (C_0 - C_1)/3 \qquad (eq7c)$$

where $C_1$ is the line positive-sequence capacitance [F], and
$C_0$ is the line zero-sequence capacitance [F].

Generally, the setting of the differential current protection may be such that it overrides the effect of the charging current. To mitigate this problem some solutions may include a so-called charging current compensation function to somewhat increase the sensitivity of the protection. This feature may be used with phase segregated schemes, for example. The main purpose of the charging current compensation function is to enable adequately sensitive differential current protection of long transmission lines and cables in low-impedance or solidly earthed networks, for example, where otherwise the magnitude of the charging current might require increasing of the basic start current threshold setting too much. The magnitude of the charging current is directly proportional to the system voltage level and to the magnitude of the distributed capacitance of the protected line, refer to Equation 7a.

In the combined sequence schemes the sensitivity may be additionally affected by the choice of the weighting coefficients. Increasing of weighting coefficient $C_2$ (eq3) can increase the earth-fault sensitivity and reduce the sensitivity difference between three-phase faults and earth faults in cases where the earth-fault current is lower than the three-phase fault current. To increase the sensitivity of earth faults and at the same time to keep the sensitivity of phase faults unaffected, a non-zero weighting coefficient $C_0$ (eq3) can be used.

Generally, the maximum sensitivity that can be achieved by the above schemes may depend on the setting of the basic start current threshold level as follows:

No charging current compensation feature in use:

$$I_B \geq 2.5 \cdot I_{CHARGE} \qquad \text{(eq 8a)}$$

Charging current compensation feature in use:

$$I_B \geq 1.0 \cdot I_{CHARGE} \qquad \text{(Eq 8b)}$$

where $I_{CHARGE}$ is the corresponding charge current component of the protected line calculated according to its positive-, (negative-) or zero-sequence capacitance depending on the applied protection scheme.

A problem related to the above differential current protection schemes, when considering their application in high impedance earthed networks, that is in e.g. unearthed, compensated and high-resistance earthed networks, is that their sensitivity may not be high enough to detect earth faults with very low current magnitudes, for instance. The sensitivity of such solutions may thus be adequate only against short circuit faults, for example. Considering earth faults in high impedance earthed networks, the magnitude of the earth-fault current can be as low as a few amperes. As this value may be below a practical charging current of the protected line, sensitive earth-fault protection may not be done with such differential current protection schemes.

Another problem of such schemes is that their reliability may be decreased when a fault has an unstable characteristic. An example of such a fault is a re-striking earth fault in a Petersen coil earthed, i.e. compensated network, where the currents and voltages can be highly irregular and distorted in shape, for instance. Therefore, the values of the phase current and voltage phasors can have a very chaotic behavior in time, i.e. values at different time instants can vary significantly. Such instability originates primarily from the fact that in practice, during a re-striking earth fault, the amplitudes and frequencies of voltages and currents are not constant. This means that assumptions of constant frequency and amplitude in phasor calculation may not be valid. Also, the non-linear characteristics of the primary network and devices, e.g. non-linear network components, such as saturable reactors or saturable instrument transformers, or non-linear characteristics of loads, can produce fluctuating levels of harmonics in the measured phase currents, which may be an error source in the protection functions. The result of this instability may be that the operate decision of protection may become unreliable, which may lead to loss of dependability or security of the protection: e.g. the faulty feeder may not be detected and the healthy feeders may be falsely seen as being faulty and therefore falsely tripped, for example.

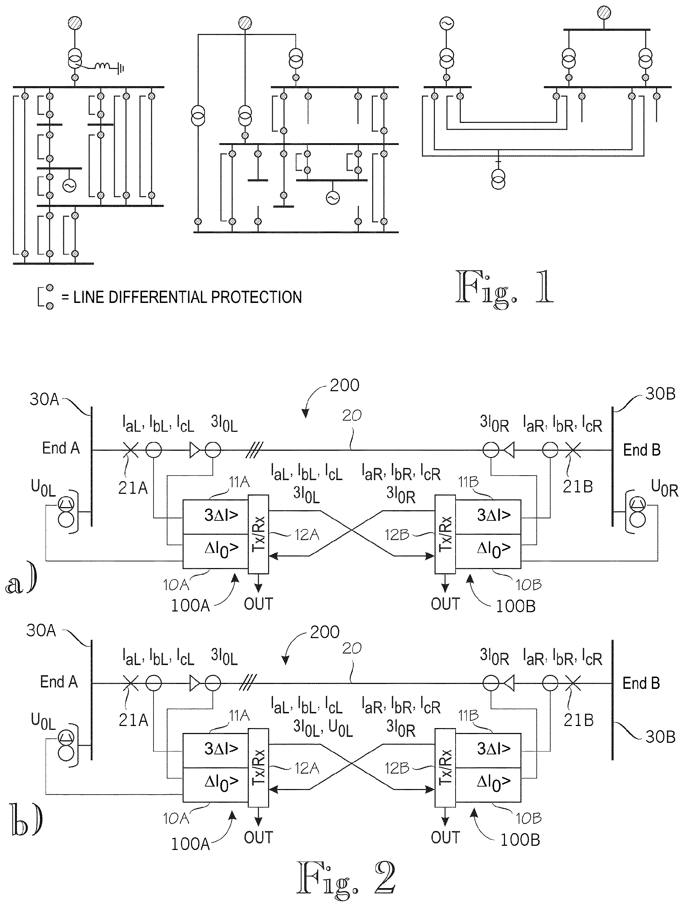

A selective earth-fault protection may be required for lines in high impedance earthed networks where line differential current protection is applied against short circuits. It would therefore be highly valuable to have a dedicated differential current protection function with high sensitivity and high reliability against earth faults. Figure 1 shows some exemplary network arrangements where line differential current protection may be applied as the main protection. As the network arrangements of Figure 1 are highly meshed and may also contain distributed generation, for example, the application of the line differential current protection is very well justified, but a problem is how to take care of the dedicated earth-fault protection of these lines such that the operation is selective, sensitive and fast enough despite the possibly changing network configurations due to daily operation.

EP 2375525 A1 describes a solution to provide a differential current relay based on the idea of using an operate quantity based on a difference of residual currents at a first point and a second point of an electric connection and a coefficient indicative of an angle between a residual voltage of the electric connection and a difference of the residual currents at the first point and the second point. A drawback of the described solution is that it can only be selective during continuous earth faults.

Other similar differential protection schemes are known from CN 101478147, EP 2088659, JP S57148521, JP S57142119.

BRIEF DESCRIPTION

An object of the present invention is thus to provide a method and an apparatus for implementing the method so as to overcome the above problems or at least to alleviate them. The objects of the invention are achieved by a method, a computer program product, and an apparatus which are characterized by what is stated in the independent claims. The preferred embodiments of the invention are disclosed in the dependent claims.

The invention is based on the idea of providing a differential protection of a three-phase electric connection based on accumulated residual currents at a first point and a second point of the three-phase electric connection and an accumulated residual voltage of the electric connection.

An advantage of the invention is that the sensitivity of the protection especially in high impedance earthed networks can be increased. Moreover, an advantage is that a single protection functionality can be used to provide selective earth-fault protection regardless of earth-fault type.

BRIEF DESCRIPTION OF THE DRAWINGS

In the following the invention will be described in greater detail by means of preferred embodiments (hereafter intended as embodiments of the present invention) with reference to the accompanying drawings, in which

Figure 1 shows examples of network arrangements with line differential current according to the prior art;
Figure 2 shows examples of arrangements according to embodiments;
Figure 3 shows examples of phasor diagrams according to embodiments;
Figure 4 shows an example of an operation characteristic according to an embodiment;
Figure 5 shows an example of an operation characteristic according to an embodiment;
Figure 6 shows an example of an operation characteristic according to an embodiment;
Figure 7 shows an example of a phasor diagram according to an embodiment; and
Figure 8 shows an example of an operation characteristic according to an embodiment.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures. Different embodiments and examples may be described below using single units, models, equipment and memory, without restricting the embodiments/examples to such a solution. It is also possible that any device operations will be distributed among a plurality of devices.

The application of the various embodiments described herein, and any combinations thereof, is not limited to any specific system, but the embodiments can be used in connection with various three-phase electric systems to detect an earth fault in a three-phase electric connection of an electric network. Examples of an earth fault include a single phase-to-earth (line-to-ground) fault as well as double and triple phase-to-earth faults, for example. The three-phase electric connection may be an electric line such as a feeder, for example, and it may be an overhead-line or a cable or a combination thereof. The three-phase electric connection may also be a part of an electric line or comprise several electric lines or sections connected together, for example. The electric network can be an electric transmission or distribution network or a part thereof, for example, and may comprise several feeders or sections, for instance. Such an electric network may be a high impedance earthed (grounded) network, examples of which include e.g. an unearthed network, a compensated network, and a high resistance earthed network. An unearthed network, for example, has an unearthed or isolated neutral, i.e. is a network which has no intentional neutral point grounding but may be grounded essentially only by the natural phase-to-earth capacitances of the network. A compensated network is a network with a compensated neutral, also known as a resonant earthed network, where compensation of fault current may be achieved by installing one or more compensation (Petersen) coils into neutral point(s) of the network. A high resistance earthed network is a network with a neutral point provided with a high resistance grounding, for example. In such high resistance earthed networks with a high resistance earthed neutral point the value of the earthing resistance may be selected such that its value essentially corresponds to a resulting capacitive reactance of phase-to-earth admittances (~capacitances) of the galvanically connected network, for instance, such that an earth-fault current is limited approximately to a value equal to or (slightly) greater than the uncompensated capacitive earth-fault current of the network. Moreover, the use of the various embodiments is not limited to systems employing 50 Hz or 60 Hz fundamental frequencies or to any specific voltage level. The various embodiments may be used alone or as a complementary function for additional line differential current protection functions and/or other kind of protection functions, for instance.

Figure 2 shows arrangements according to some possible embodiments. Alternative a) of Figure 2 shows an arrangement in which a three-phase electric connection 20 of a three-phase electric network 200 is protected by differential protection units 100A and 100B at both ends thereof. The differential protection units 100A, 100B may constitute a protective relay device or devices, for example, and may be configured to control one or more circuit breakers 21A, 21B and/or other switching equipment. Such protective relay device or devices may have also other functionality, which is not shown in the figure, for instance. The differential protection units 100A, 100B in this example each comprise a conventional differential protection sub-unit ($3\Delta I>$) 11A, 11B, a directional residual differential current protection sub-unit ($\Delta I_0>$) 10A, 10B, and a transmitter-receiver sub-unit (Tx/Rx) 12A, 12B, respectively. These three sub-units 10A/10B, 11A/11B and 12A/12B may be implemented as one physical unit or device or as a system comprising more than one separate physical units or devices. It is also possible to combine at least some such exemplary sub-units of different connection ends into the same physical unit or device, for example. Moreover, the differential protection units 100A, 100B could be implemented at least partly within a single physical unit, device, or system instead of separate units as shown in the exemplary figure. The ends of the exemplary three-phase electric connection 20 have been identified as 'End A' (with busbar 30A) and 'End B' (with busbar 30B) in the Figure. For the first differential protection unit 100A 'End A' is the local end and 'End B' is the remote end. However, for the second differential protection unit 100B the connection end marked 'End A' is the remote end and the connection end marked 'End B' is the local end. While the three-phase electric network 200 in Figure 2 for the sake of clarity is shown in a simplified manner comprising only one three-phase electric connection 20 and the busbars 30A, 30B at the ends of the three-phase electric connection 20, the three-phase electric network 200 may comprise any number of network elements and may be further connected to one or more other electric networks, for example. Some examples of three-phase electric networks comprising a plurality of three-phase electric connections and other network elements are shown in Figure 1.

At each connection end, A and B, the residual current (i.e. three-fold zero-sequence currents) $3 \cdot \overline{I}_{0L}$ and $3 \cdot \overline{I}_{0R}$, the residual voltage (i.e. zero-sequence voltage) $\overline{U}_{0L}$ and $\overline{U}_{0R}$ and the three phase currents $\overline{I}_{aL}$, $\overline{I}_{bL}$, $\overline{I}_{cL}$ and $\overline{I}_{aR}$, $\overline{I}_{bR}$, $\overline{I}_{cR}$ for the three phases a, b, c may be monitored by the respective differential protection unit 100A, 100B. Any current and/or voltage quantities possibly needed in the various embodiments may be monitored essentially continuously or the monitoring of at least some quantities may start only upon detecting an earth fault, for example. It is assumed here that a positive current flow is from the connection end (busbar 30A, 30B) towards the three-phase electric connection 20 at both ends of the three-phase electric connection. The current values are then preferably interchanged between the differential protection units 100A, 100B of the different ends A, B by the transmitter-receiver sub-units 12A and 12B in a wired and/or wireless manner using any suitable communication protocol(s), or by any other suitable communication arrangement, for example. The residual voltage may be based on a local measurement if suitable measurement transformers are available in both connection ends, for instance. Alternatively, the residual voltage measured in one end can be transmitted to the other end of the three-phase electric connection 20 using the same communication media/interface as is used for interchanging the current values, for example. When the solution according to any of the various embodiments is implemented as a complementary function for a conventional differential current protection scheme of the connection, as shown in the examples in Figure 2, requiring already the transfer of the phase current phasor information between the three-phase electric connection 20 ends, the same already existing communication media/interface can be used/extended for the needs of the additional functionality according to any of the embodiments. To maximize the sensitivity of the scheme, suitable cable current transformers (e.g. ring core current transformers) may be used for the measurement of the residual currents ($3 \cdot \overline{I}_{0L}$ and $3 \cdot \overline{I}_{0R}$). However, the sum connection of phase current transformers or numerically calculated residual current from phase currents ($3 \cdot \overline{I}_{0L} = \overline{I}_{aL} + \overline{I}_{bL} + \overline{I}_{cL}$ and $3 \cdot \overline{I}_{0R} = \overline{I}_{aR} + \overline{I}_{bR} + \overline{I}_{cR}$ ) measured by phase current transformers or Rogowski sensors, for example, can be used as well. Generally, any suitable, and possibly already existing, direct or indirect current measuring arrangements may be utilized. In addition to the current quantities, the residual voltage of the system is obtained with any suitable direct or indirect voltage measuring arrangement. As an example, the residual voltage can be measured from an open delta winding of a voltage transformer, as shown in the exemplary Figure, or it can be calculated numerically from phase-to-earth voltages ($\overline{U}_{0L} = (\overline{U}_{aL} + \overline{U}_{bL} + \overline{U}_{cL})/3$ and $\overline{U}_{0R} = (\overline{U}_{cR} + \overline{U}_{bR} + U_{cR})/3$) measured by suitable voltage transformers or resistive voltage dividers, for example. The residual voltage may be determined individually by the differential protection units 100A, 100B of different ends at different points, as shown in alternative a) of Figure 2. Alternatively, the residual voltage may be determined by only one of the two differential protection units 100A, 100B and then transferred to the other differential protection unit by means of the transmitter-receiver sub-units 12A and 12B, for example, as shown in alternative b) of Figure 2, which otherwise corresponds to alternative a) of Figure 2.

According to an embodiment, a differential protection of the three-phase electric connection 20 of the three-phase electric network 200, comprises detecting an earth fault in the three-phase electric network 200, and in response to detecting the earth fault in the three-phase electric network 200, determining a value for an operate quantity. According to an embodiment, the determined value for the operate quantity is compared with one or more thresholds or an operation characteristic, and on the basis of the comparing, it is determined whether the detected earth fault is in the three-phase electric connection 20 between a first point and a second point of the three-phase electric connection. Examples of these are given in the following.

According to an embodiment, the determining of the value for the operate quantity comprises forming a cumulative phasor sum of at least two values, determined at different instants of time, of an electric phasor quantity, wherein the electric phasor quantity is based on a residual current at a first point of the three-phase electric connection 20, a residual current at a second point of the three-phase electric connection 20, and a residual voltage of the three-phase electric connection 20, or quantities indicative thereof, and setting the cumulative phasor sum as the value for the operate quantity. According to an embodiment, such an operate quantity may be indicative of a direction of the detected earth fault with respect to the first (or second) point of the three-phase electric connection 20. According to an embodiment, if the direction of the detected earth fault is "forward", then the fault may be determined to be located inside the three-phase electric connection 20 between the first point and the second point of the three-phase electric connection. And if the direction of the detected earth fault is "reverse", then the fault may be determined to be located outside the three-phase electric connection 20 between the first point and the second point of the three-phase electric connection. According to an embodiment, the value of the operate quantity may be based on an accumulated sum of values of an electric phasor quantity based on a sum of the residual current near or at the local end (or generally the residual current measured or determined at the first point) and the residual current near or at the remote end (or generally the residual current measured or determined at the second point) divided with the residual voltage of the electric connection 20. According to an embodiment, the value for the (directional) operate quantity, denoted as *DIR,* may be determined based on the following equation:

$$\overline{DIR}(i) = \sum_{i=m}^{k} \frac{3 \cdot \overline{I}_{0L}(i) + 3 \cdot \overline{I}_{0R}(i)}{-\overline{U}_0(i)} = \sum_{i=m}^{k} \frac{3 \cdot \Delta \overline{I}_0(i)}{-\overline{U}_0(i)} = \sum_{i=m}^{k} \Delta \overline{Y}_o(i)$$

$$= Re(\overline{DIR}(i)) + j \cdot Im(\overline{DIR}(i)) \qquad (eq9)$$

where

$i$ is a discrete time instance starting at or after the time, when the earth fault is detected,
$m$ is a start index number corresponding to discrete time instance t1,
$k$ is an index number corresponding to discrete time instance tk occurring after time instance t1,
$3 \cdot \overline{I}_{0L}$ is the local (line end 'A') end residual current phasor at the first point such that a positive current flow is towards the remote end (line end 'B'),
$3 \cdot \overline{I}_{0R}$ is the remote end (line end 'B') residual current phasor at the second point such that a positive current flow is towards the local end (line end 'A'),
$3 \cdot \Delta \overline{I}_0$ is the residual differential current, i.e. the sum of currents of $3 \cdot \overline{I}_{0L}$ and $3 \cdot \overline{I}_{0R}$,
$\Delta \overline{Y}_o(i)$ is the residual differential admittance calculated based on the residual differential current and residual voltage.

According to an embodiment, the residual voltage $\overline{U}_0$ may be a locally measured voltage ($\overline{U}_{0L}$ in the line end 'A' and $\overline{U}_{0R}$ in the line end 'B'). Alternatively, the residual voltage can be measured at one end of the three-phase electric connection 20 only and then transmitted to the other end.

According to an embodiment, the electric phasor quantity used for determining the value for the operate quantity may be a fundamental frequency phasor quantity based only on the fundamental frequency components of the residual currents and the residual voltage, but the electric phasor quantity can alternatively be based on a sum of the fundamental frequency component and at least one harmonic frequency component of the residual currents and the residual voltage, for example. This will be exemplified later in connection with Equation 12.

According to an embodiment, as a start condition for the accumulation of phasors according to Equation 9, a detection of the earth fault in the three-phase electric network 200 may be used. The earth-fault detection may be based on a residual voltage magnitude or its change, for example, which may be compared with a pre-determined threshold value.

When the pre-determined threshold value is exceeded, then the earth-fault condition in the three-phase electric network 200 may be declared, and the accumulation of the phasors may be started. The detection of the earth fault in the three-phase electric network 200 may, however, be based on any suitable or applicable method or arrangement. The detection of the earth fault in the three-phase electric network 200 may also be based on receiving an indication of the earth fault in the three-phase electric network. Such an indication may be received from another entity in the system, for example.

According to an embodiment, the determining of the value for the operate quantity *DIR* may thus comprise forming a cumulative phasor sum of at least two values, determined at different instants of time, e.g. according to Equation 9, and setting the cumulative phasor sum as the value for the operate quantity *DIR*. The cumulative phasor sum according to Equation 9 may be formed separately for real and/or imaginary parts. In other words, such a cumulative phasor sum according to Equation 9 and calculated separately for real and/or imaginary parts can be used as a directional quantity for the differential protection of the three-phase electric connection 20. According to an embodiment, the two or more values of the electric phasor quantity determined at different instants of time may be determined at constant intervals or at irregular intervals, for example.

According to an embodiment, the real and imaginary parts of the operate quantity $\overline{DIR}$ can be obtained using the well-known rules of division of complex quantities, for instance.

According to an embodiment, when the earth fault is located inside the three-phase electric connection 20, the result of an operate quantity *DIR* evaluation with fundamental frequency at steady state can be written with basic system data of the electric network 200 in terms of current as:

$$\text{angle}(\overline{DIR}) = angle\big((I_d - j \cdot I_v) - I_{EFFd} \cdot (d_{Net} + j \cdot 1)\big) \ (eq10)$$

where

$I_d$ is the total network damping due to shunt losses [A],
$I_v$ is the detuning degree of the compensation coil [A] (Positive = over-compensation, negative = under-compensation, zero = resonance),
$I_{EFFd}$ is the capacitive earth-fault current produced by the protected feeder [A], and
$d_{Net}$ is a factor [pu] to approximate the natural losses of the feeder/network, typical value may be between 0.01...0.10, where mathematical function "angle" defines the phase angle for the directional operate quantity, which can be calculated as atan2(imag(DIR),real(DIR)).

According to an embodiment, when the earth fault is located outside the three-phase electric connection 20, the result of the operate quantity $\overline{DIR}$ evaluation at steady state can be written with system basic data of the electric network 200 in terms of current as:

$$angle(\overline{DIR}) = angle(-I_{EFFd} \cdot (d_{Net} + j \cdot 1)) \qquad (eq11)$$

As the directional operate quantity *DIR* is based on the accumulated residual differential admittance value, only the direction or the phase angle of directional quantity *DIR* may be meaningful, not the amplitude. The use of the cumulative phasor sum according to Equation 9 as a directional phasor quantity according to the above embodiments may mean that the resulting directional phasor builds up, i.e. its amplitude accumulates, during the time of a fault and its directionality may then be determined by all the individual phasors included in the cumulative phasor sum thus obtained. On the other hand, the "weight" of an individual new phasor added to the cumulative phasor sum decreases in time. That is, it may be concluded that the resulting directional phasor, i.e. operate quantity *DIR,* points to the direction of the highest momentum or energy of the individual phasors at different time intervals. This in turn can result in great stabilization of the directional operate quantity *DIR* and provide great improvement in the security and dependability of the directional evaluation.

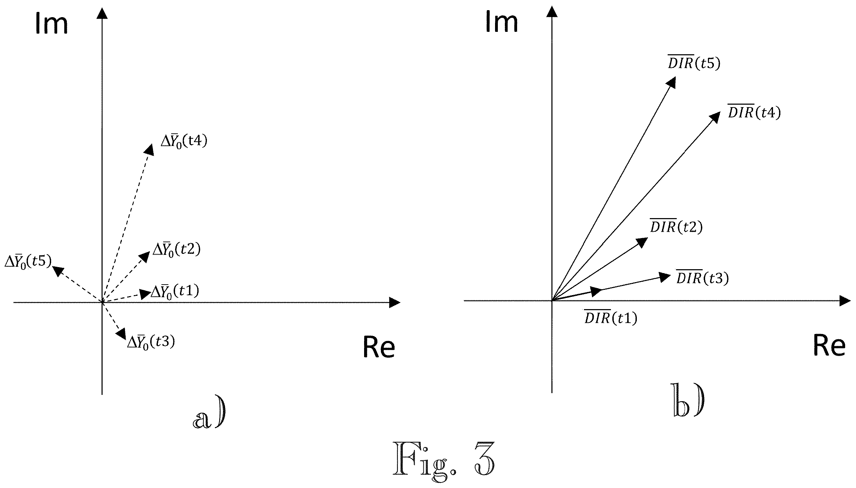

Figure 3 shows examples of phasor diagrams according to embodiments. Diagram a) of Figure 3 shows an example of residual differential admittance $\Delta\overline{Y}_o(i)$ values at time instants *t1, t2, t3, t4* and *t5*. In diagram b) of Figure 3 the corresponding directional operate quantity $\overline{DIR}$ is presented, which is a cumulative sum of the residual differential admittance values according to Equation 9 at different time instants *t1, t2, t3, t4* and *t5*. According to an embodiment, the cumulative phasor sum according to Equation 9 can then be used for the directional decision by setting the cumulative phasor sum as the value for the operate quantity. Then such value for the operate quantity can be compared with one or more thresholds or an operation characteristic, and on the basis of the comparing, it can be determined whether the detected earth fault is inside the three-phase electric connection 20 between the first point and the second point of the three-phase electric connection or not. According to an embodiment, fault location within the electric connection between the first point and the second point can be determined by comparing the directional operate quantity based on Equation 9 with a pre-determined operation characteristic. Such pre-determined operation characteristic may be defined based on knowledge on the resulting directional quantity during an inside and outside earth fault based on Equations 10 and 11, for example. It is also possible to define the pre-determined operation characteristic in some other way.

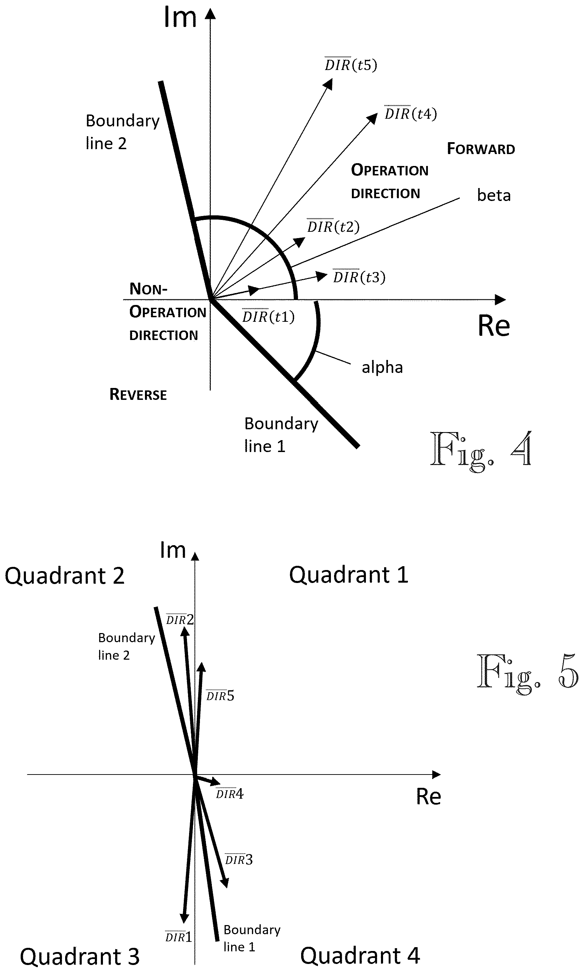

Figure 4 shows an example of an operation characteristic according to an embodiment. In the exemplary directional operation characteristic of Figure 4 two boundary lines 1, 2 define a boundary between an operation direction (indicating that the earth fault is located inside the electric connection 20) and a non-operation direction (indicating that the earth fault is located outside the electric connection 20). The location of the boundary lines in the operation characteristic may be defined by suitably setting values alpha [deg] and beta [deg], for example. According to an embodiment, the sector corresponding to the operation direction may be set to a forward direction and the non-operation direction to a reverse direction as illustrated. Figure 4 also shows an operate quantity which corresponds to the directional operate quantity $\overline{DIR}$ at different time instants $t1, t2, t3, t4$ and $t5$ shown in diagram b) of Figure 3.

Figure 5 shows an example of an operation characteristic according to an embodiment. The example of Figure 5 illustrates a complex operation plane valid for the directional operate quantity $\overline{DIR}$ according to an embodiment. According to Equations 10 and 11, the following applies in various configurations:

- In case of a fault outside the electric connection 20, which has a capacitive shunt admittance (the electric connection 20 is not over-compensated, i.e. it is under-compensated), the directional operate quantity, phasor $\overline{DIR}1$, lays in the $3^{rd}$ quadrant of the complex operation plane; the resistive part of directional quantity is negative and the imaginary part is negative.

- In case of a fault outside the electric connection 20, which has an inductive shunt admittance (the electric connection 20 is over-compensated), the directional operate quantity, phasor $\overline{DIR}2$, lays in the $2^{nd}$ quadrant of the complex operation plane; the resistive part of the directional operate quantity is negative and the imaginary part is positive.

- In case of a fault inside the electric connection 20, the directional operate quantity lays in the $1^{st}$ or $4^{th}$ quadrant of the complex operation plane; the resistive part of directional operate quantity is positive and the imaginary part is either positive or negative, depending on the total admittance of a "background" network (total network admittance of the electric network 200 subtracted by the admittance of the electric connection 20), phasors $\overline{DIR}3$, $\overline{DIR}4$ and $\overline{DIR}5$. When the degree of over-compensation is increased, the directional operate quantity $\overline{DIR}$ turns towards the negative imaginary axis, phasor $\overline{DIR}3$. On the other hand, when the degree of under-compensation is increased, the directional operate quantity $\overline{DIR}$ turns towards the positive imaginary axis, phasor $\overline{DIR}5$. The real part of the directional operate quantity $\overline{DIR}$ is not affected by the compensation degree; it is positive during an inside fault and negative during an outside fault. In practice, due to measurement inaccuracies, for example, the resistive part of the directional operate quantity $\overline{DIR}$ during an outside fault (phasor $\overline{DIR}1$) may not be negative, but positive (due to an apparent resistive component). Measurement inaccuracies should therefore preferably be considered, especially when determining the resistive boundary line or tilt angle of operate sector for the directional operate quantity $\overline{DIR}$.

According to the Equations 10 and 11, in case the electric connection 20 has an inductive shunt admittance (the electric connection 20 is over-compensated), the directional operate quantity lays in the second quadrant during an outside fault, phasor $\overline{DIR}2$. This means that a selective directional decision, i.e. determining whether the detected earth fault is inside the three-phase electric connection 20 between the first point and the second point of the three-phase electric connection or not, is preferably not in this case based on the sign of the imaginary-part of the directional operate quantity $\overline{DIR}$, but on the sign of the resistive part thereof, for example.

According to an embodiment, the value of the operate quantity $\overline{DIR}$ may also be "normalized" by dividing it with the number of how many individual phasors the cumulative phasor sum consists of. According to an embodiment, the cumulative value of the operate quantity $\overline{DIR}$ may also be limited to some predetermined value, for instance. This may be used to avoid any numerical overflow problems, for example.

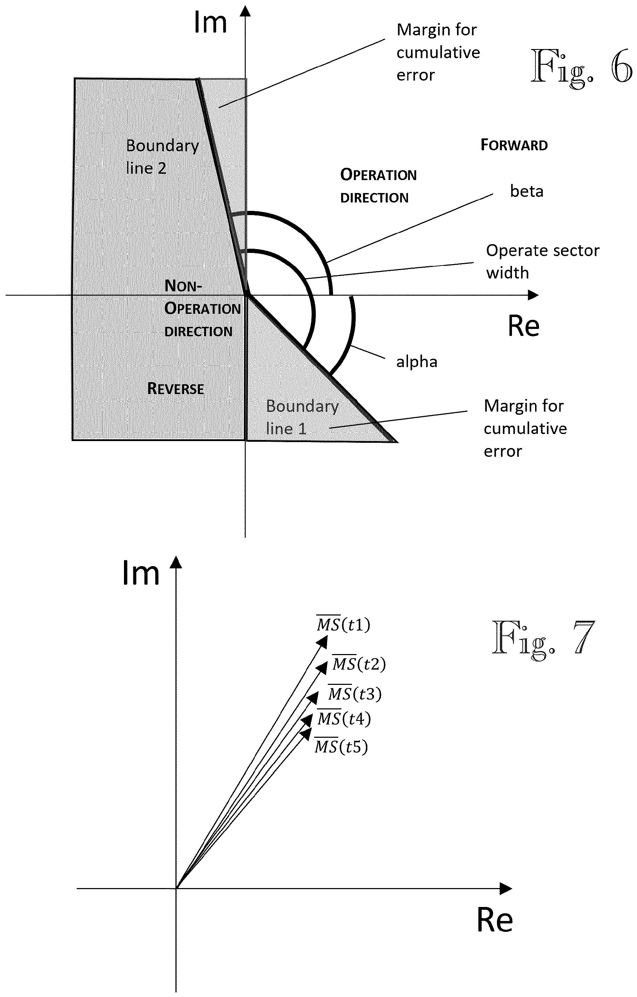

As the possible measurement error in the directional operate quantity according to Equation 9 accumulates, the directional characteristics applicable for this approach can have at least one tilted boundary line providing a margin for this cumulative error, for example. This may be the case if both the real and imaginary parts of cumulative phasor sum are simultaneously used in the directional evaluation, for instance. An example of this is illustrated in Figure 6 which presents an example of a directional operation characteristic according to an embodiment. The exemplary operation characteristic shows two exemplary margins for the cumulative error. The width of these margins may depend on the accuracy of the measurements in question.

According to an embodiment, any of the following can be performed at constant intervals or at irregular intervals: updating the cumulative phasor sum of Equation 9 (preferably separately for the real and/or imaginary parts) by adding new values of residual currents and residual voltage to the sum, setting the updated cumulative phasor sum as the (updated) value for the directional operate quantity, and comparing the (updated) value for the directional operate quantity with the operation characteristic to determine whether the detected earth fault is inside the three-phase electric connection 20 between the first point and the second point of the three-phase electric connection or not. A prerequisite for adding a new value may be that its magnitude exceeds a minimum threshold so that its directionality can be considered to be valid, for example. In other words, the cumulative phasor sum constituting the value for the directional operate quantity can be updated at constant intervals or at irregular intervals by adding a new value of the electric quantity to the cumulative phasor sum, and the corresponding new value for the directional phasor quantity can then be used to determine the location of the earth fault, i.e. inside or outside of the three-phase electric connection 20. The previously described process of accumulation can be done separately for real- and/or imaginary parts of an electrical phasor quantity, for instance.

According to an embodiment, the value of the directional operate quantity $\overline{DIR}$ may be based only on the fundamental frequency component of the residual currents and the residual voltage, but it can alternatively consist of a sum of a fundamental frequency component and at least one harmonic frequency component of the residual currents and the residual voltage. According to an embodiment, the directional operate quantity can be of form:

$$\overline{DIR}(i) = \overline{DIR}_1(i) + \sum_2^p \overline{DIR}_n(i) \qquad (Eq12)$$

where

$\overline{DIR}_1$ is the directional phasor quantity according to Equation 9 calculated at the fundamental frequency $f_n$ at a discrete time instance $i$, and

$\overline{DIR}_n(i)$ is the directional phasor quantity according to Equation 9 calculated at a harmonic frequency $n*f_n$ at a discrete time instance $i$, preferably such that the harmonic current and/or voltage magnitude exceeds a minimum measurable threshold level, for example. Harmonics from 2 to p can be taken into account, where p corresponds to the highest order harmonic based on e.g. a used sampling frequency according to the Nyqvist theorem.

According to an embodiment, the determining of the value for the operate quantity comprises forming a first cumulative phasor sum of at least two values, determined at different instants of time, of a first electric phasor quantity, wherein the first electric phasor quantity is based on the residual current at the first point of the three-phase electric connection 20 and the residual current at the second point of the three-phase electric connection 20, or quantities indicative thereof. According to this embodiment, the determining of the value for the operate quantity further comprises forming a second cumulative phasor sum of at least two values, determined at different instants of time, of a second electric phasor quantity, wherein the second electric phasor quantity is based on the residual voltage of the three-phase electric connection 20, or a quantity indicative thereof. According to this embodiment, the determining of the value for the operate quantity further comprises setting a quotient of the determined first cumulative phasor sum and the determined second cumulative phasor sum as the value for the operate quantity. According to an embodiment, such an operate quantity may be indicative of a presence of an earth fault and its location. According to an embodiment, the value of the operate quantity may be based on a first accumulated sum of values of a first electric phasor quantity based on a sum of the residual current near or at the local end (or generally the residual current measured or determined at the first point) and the residual current near or at the remote end (or generally the residual current measured or determined at the second point) divided with a second accumulated sum of values of a second electric phasor quantity based on the residual voltage of the electric connection 20. Each of the two cumulative sums can be formed essentially in a similar way as already described above in connection with Equation 9. According to an embodiment, the value for the (magnitude supervision) operate quantity, denoted as $\overline{MS}$, may be determined based on the following equation:

$$\overline{MS}(i) = \frac{\sum_{i=m}^k (3 \cdot \overline{I}_{0L}(i) + 3 \cdot \overline{I}_{0R}(i))}{\sum_{i=m}^k -\overline{U}_0(i)} = \frac{\sum_{i=m}^k 3 \cdot \Delta \overline{I}_0(i)}{\sum_{i=m}^k -\overline{U}_0(i)} = \Delta \overline{Y}_{ostab}(i)$$

$$= Re\left(\overline{MS}(i)\right) + j \cdot Im(\overline{MS}(i)) \qquad (eq13)$$

where

$i$ is a discrete time instance starting at or after the time, when the earth fault is detected,

$m$ is a start index number corresponding to discrete time instance $t1$,

$k$ is an index number corresponding to discrete time instance tk occurring after time instance $t1$,

$3 \cdot \overline{I}_{0L}$ is the local (line end 'A') end residual current phasor at the first point such that a positive current flow is towards the remote end (line end 'B'),

$3 \cdot \overline{I}_{0R}$ is the remote end (line end 'B') residual current phasor at the second point such that a positive current flow is towards the local end (line end 'A'),

$3 \cdot \Delta \overline{I}_0$ is the residual differential current, i.e. the sum of currents of $3 \cdot \overline{I}_{0L}$ and $3 \cdot \overline{I}_{0R}$,

$\Delta \overline{Y}_{ostab}$(i) is the stabilized residual differential admittance calculated based on the residual differential current and residual voltage.

According to an embodiment, the residual voltage $\overline{U}_0$ may be a locally measured voltage ($\overline{U}_{0L}$ in the line end 'A' and $\overline{U}_{0R}$ in the line end 'B'). Alternatively, the residual voltage can be measured at one end of the three-phase electric connection 20 only and then transmitted to the other end.

According to an embodiment, the first and second electric phasor quantities used for determining the value for the operate quantity may be fundamental frequency phasor quantities based only on the fundamental frequency components of the residual currents and the residual voltage, but the electric phasor quantities can alternatively be based on a sum of the fundamental frequency component and at least one harmonic frequency component of the residual currents and the residual voltage, for example.

According to an embodiment, as a start condition for the accumulation of phasors according to Equation 13, a detection of the earth fault in the three-phase electric network 200 may be used. The earth-fault detection may be based on a residual voltage magnitude or its change, for example, which may be compared with a pre-determined threshold value. When the pre-determined threshold value is exceeded, then the earth-fault condition in the three-phase electric network 200 may be declared, and the accumulation of the phasors may be started. The detection of the earth fault in the three-phase electric network 200 may, however, be based on any suitable or applicable method or arrangement. The detection of the earth fault in the three-phase electric network 200 may also be based on receiving an indication of the earth fault in the three-phase electric network. Such an indication may be received from another entity in the system, for example.

According to an embodiment, the determining of the value for the operate quantity $\overline{MS}$ may thus comprise forming a quotient of two cumulative phasor sums of at least two values, determined at different instants of time, e.g. according to Equation 13, and setting the quotient of two cumulative phasor sums as the value for the operate quantity $\overline{MS}$. The operate quantity according to Equation 13 may be formed separately for real and/or imaginary parts.

The real- and imaginary part of magnitude supervision quantity $\overline{MS}$ can be obtained using the well-known rules of division of complex quantities. According to an embodiment, the two or more values of the electric phasor quantities determined at different instants of time may be determined at constant intervals or at irregular intervals, for example.

When an earth fault is located inside the three-phase electric connection 20, the result of the operate quantity $\overline{MS}$ at steady state with fundamental frequency in terms of current can be written with basic system data of the electric network 200 as:

$$\overline{MS} = (I_d - j \cdot I_v) - I_{EFFd} \cdot (d_{Net} + j \cdot 1) \qquad (eq14)$$

where

$I_d$ is the total network damping due to shunt losses [A],
$I_v$ is the detuning degree of the compensation coil [A] (Positive = over-compensation, negative = under-compensation, zero = resonance),
$I_{EFFd}$ is the capacitive earth-fault current produced by the protected feeder [A], and
$d_{Net}$ is a factor [pu] to approximate the natural losses of the feeder/network, typical value may be between 0.01...0.10.

When an earth fault is located outside the three-phase electric connection 20, the result of magnitude supervision operate quantity $\overline{MS}$ at steady state can be written in terms of current with system basic data of the electric network 200 as:

$$\overline{MS} = -I_{EFFd} \cdot (d_{Net} + j \cdot 1) \qquad (eq15)$$

As the magnitude supervision operate quantity $\overline{MS}$ is based on dividing two cumulative phasor sum quantities with each other, the result is a "stabilized" phasor quantity, which has meaningful amplitude and direction (or equivalently real and imaginary parts) as stated by Equations 14 and 15. This is illustrated in exemplary Figure 7, which shows the magnitude supervision operate quantity $\overline{MS}$ at different time instants $t1$, $t2$, $t3$, $t4$ and $t5$. According to an embodiment, the operate quantity $\overline{MS}$ determined according to Equation 13 can then be compared with one or more thresholds or an operation characteristic, and on the basis of the comparing, a presence of an earth fault in the electric connection 20 between the first point and the second point can be determined, i.e. it can be determined whether the detected earth fault is inside the three-phase electric connection 20 between the first point and the second point of the three-phase electric connection or not. Pre-determined threshold(s) may be based on the magnitude, phase angle, real-part or imaginary part of magnitude supervision operate quantity $\overline{MS}$, or any combinations of them, for example. Presence of the earth fault can also be determined by comparing the magnitude supervision operate quantity $\overline{MS}$ of Equation 13 with a pre-determined operation characteristic, for instance.

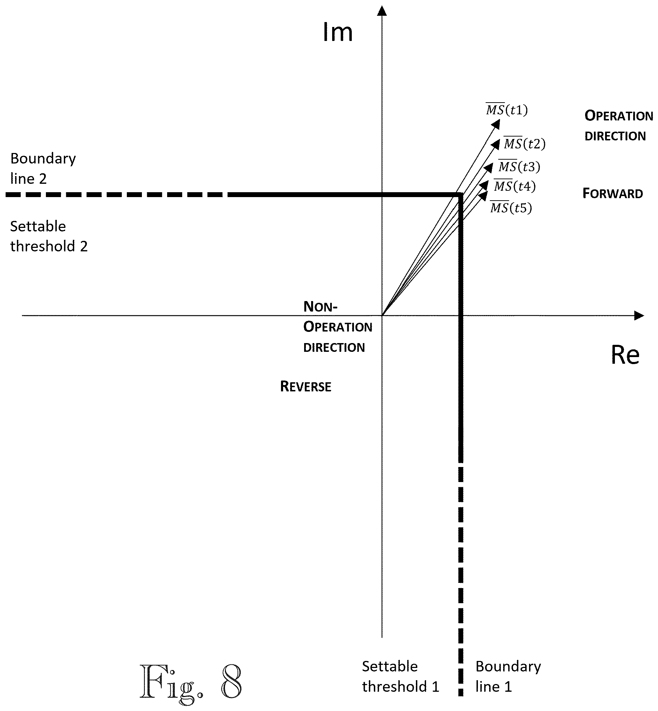

Figure 8 presents an example of a directional operation characteristic applicable with magnitude supervision operate quantity $\overline{MS}$ of Equation 13. The operation characteristic of Figure 8 defines forward (operation direction) and reverse (non-operation direction) operation areas with two settable thresholds. It should be noted that the operation characteristic shown in Figure 8 is only one example of a possible operation characteristic. Other kind of operation characteristics could be used instead.

According to an embodiment, the values of the residual currents and residual voltage phasors in Equation 13 may be based on the fundamental frequency components of the electric quantities, but they can also consist of a sum of a fundamental frequency component of the electric quantity in question and at least one harmonic frequency component of the electric quantity in question essentially in a similar manner as already described above in connection with Equation 12.

According to an embodiment, the following can be performed at constant intervals or at irregular intervals: updating the first cumulative phasor sum and the second cumulative phasor sum in Equation 13 by adding a new value of the sum of residual currents at the local end (first point) and the remote end (second point) to the first cumulative phasor sum and by adding a new value of the residual voltage of the electric connection 20 to the second cumulative phasor sum, setting a quotient of the updated first cumulative phasor sum and the updated second cumulative phasor sum as the (updated) value for the magnitude supervision operate quantity, and comparing the (updated) value with the pre-determined thresholds (magnitude, phase angle, real or imaginary parts) to determine the presence of fault current in the electric connection 20 between the first point and the second point.

According to exemplary equation 13, the magnitude supervision operate quantity $\overline{MS}$ is an admittance obtained by dividing residual current with residual voltage. According to an embodiment, the value for the magnitude supervision operate quantity can be further converted from an admittance value to a current value by applying a complex conjugate and multiplying it with a nominal phase-to-earth voltage of the system $U_n$ e.g. as follows:

$$\overline{MS}(i) = conj\left(\overline{MS}(i)\right) \cdot U_n \qquad (eq16)$$

According to embodiments, the fault directional operate quantity $\overline{DIR}$ obtained from exemplary Equation 9 and the magnitude supervision operate quantity $\overline{MS}$ obtained from exemplary Equation 13 or exemplary Equation 16 can be used either independently or together to provide the operation of the differential protection of the three-phase electric connection 20. If the fault directional operate quantity (eq9) is combined with the magnitude supervision operate quantity (eq13, eq16), then for example, for forward operation it may be required that the directional phasor is within a pre-defined operate sector and that the amplitude, or the value of its real- or imaginary part, exceeds a preset threshold, for example.

Further security for the evaluation of the presence of the earth fault inside the electric connection 20 can be obtained by monitoring e.g. the amplitude, or the value of its real or imaginary part, of the magnitude supervision operate quantity $\overline{MS}$ in time, for instance.

An advantage of the above embodiments is that they can stabilize and improve the security and dependability of the operation of the differential protection e.g. during irregular and/or distorted current and voltage waveforms, for example. One example, where such stabilization may be required, is a re-striking earth fault in Petersen coil earthed systems, when fundamental frequency-based methods are applied. But it can also be applied to cases, where the directional phasor quantity is based on a frequency other than fundamental, e.g. harmonic frequencies, for example.

The differential protection unit or units 100A, 100B, or other protective equipment implementing the functionality according to any of the embodiments described herein, may be configured to detect an earth fault in the three-phase electric connection 20 between the first point and the second point of the three-phase electric connection according to any of the embodiments described above, and consequently to operate the earth-fault protection of the electric line 20. The operating of the earth-fault protection may comprise tripping one or more switching devices in the three-phase electric network and/or preventing (blocking) a tripping of one or more switching devices in the three-phase electric network. Additionally or alternatively, the operating of the earth-fault protection may comprise switching off or limiting the earth-fault current of the detected earth fault on the three-phase electric line 20 and/or performing an alarm, for example. Switching off the earth-fault current of the detected earth fault 20 could be performed by switching off the electric line 20 from the feeding point, such as a substation, or from both ends thereof with suitable switching means, such as one or more circuit breakers 21A, 21B, or other kind of switchgear. Limiting the earth-fault current of the detected earth fault 20 could be performed by limiting or reducing, without a complete disconnection, the earth-fault current flowing to the electric line 20 from a feeding point with suitable fault current controller means. The operation of the differential protection units 100A and 100B at both ends (or other locations) of the three-phase electric connection 20 of a three-phase electric network 200 may be coordinated with each other or they may operate independently from each other, for example. The differential protection unit(s) 100A, 100B or corresponding apparatus may also support or employ any kind of transfer trip functionality enabling remote tripping according to a transfer trip scheme.

An apparatus according to any one of the above embodiments, or a combination thereof, may be implemented as one unit or as two or more separate units that are configured to implement the functionality of the various embodiments. Here the term 'unit' refers generally to a physical or logical entity, such as a physical device or a part thereof or a software routine. One or more of these units may reside in a protective relay device or equipment, for example.

An apparatus according to any one of the embodiments, such as one or more differential protection units 100A, 100B and/or other means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing the functionality according to any one of the embodiments.

The invention can be implemented in existing system elements, such as various protective relays or similar devices, and/or by using separate dedicated elements or devices in a centralized or distributed manner. Protective devices for electric systems, such as protective relays, may comprise processors and memory that can be utilized in implementing the functionality according to embodiments. Thus, at least some modifications and configurations possibly required for implementing an embodiment e.g. in existing protective devices may be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiment(s) as described herein. Such a computer program code may be stored or generally embodied on a computer readable medium, such as suitable memory, e.g. a flash memory or an optical memory, from which it may be loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, may constitute the protection unit, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

## Claims

1. A method for differential protection of a three-phase electric connection of a three-phase electric network, the method comprising:

   a) detecting an earth fault in the three-phase electric network (200);
   b) in response to detecting the earth fault in the three-phase electric network (200), determining a value for an operate quantity, the determining comprising:

      b1) forming a cumulative phasor sum of at least two values, determined at different instants of time, of an electric phasor quantity, wherein the electric phasor quantity is based on a residual current at a first point of the three-phase electric connection (20), a residual current at a second point of the three-phase electric connection (20), and a residual voltage of the three-phase electric connection (20), or quantities indicative thereof; and setting the cumulative phasor sum as the value for the operate quantity,
or
b2) forming a first cumulative phasor sum of at least two values, determined at different instants of time, of a first electric phasor quantity, wherein the first electric phasor quantity is based on the residual current at the first point of the three-phase electric connection (20) and the residual current at the second point of the three-phase electric connection (20), or quantities indicative thereof; forming a second cumulative phasor sum of at least two values, determined at different instants of time, of a second electric phasor quantity, wherein the second electric phasor quantity is based on the residual voltage of the three-phase electric connection (20), or a quantity indicative thereof; and setting a quotient of the first cumulative phasor sum and the second cumulative phasor sum as the value for the operate quantity;

c) comparing the determined value for the operate quantity with one or more thresholds or an operation characteristic; and
d) determining, on the basis of the comparing, whether the detected earth fault is in the three-phase electric connection (20) between the first point and the second point of the three-phase electric connection (20).

2. A method as claimed in claim 1, wherein, as per alternative b1), the value for the operate quantity is determined based on the following equation:

$$\overline{DIR}(i) = \sum_{i=m}^{k} \frac{3 \cdot \overline{I}_{0L}(i) + 3 \cdot \overline{I}_{0R}(i)}{-\overline{U}_0(i)}$$

where

i is a discrete time instance starting at or after detecting the earth fault in the three-phase electric network,
m is a start index number corresponding to discrete time instance t1, k is an index number corresponding to discrete time instance tk occurring after time instance t1,
$3 \cdot \overline{I}_{0L}$ is the residual current at the first point of the three-phase electric connection such that a positive current flow is towards the second point of the three-phase electric connection,
$3 \cdot \overline{I}_{0R}$ is the residual current at the second point of the three-phase electric connection such that a positive current flow is towards the first point of the three-phase electric connection, and
$\overline{U}_0$ is the residual voltage of the three-phase electric connection.

3. A method as claimed in claim 1 or 2, wherein, as per alternative b2), the value for the operate quantity is determined based on the following equation:

$$\overline{MS}(i) = \frac{\sum_{i=m}^{k}(3 \cdot \overline{I}_{0L}(i) + 3 \cdot \overline{I}_{0R}(i))}{\sum_{i=m}^{k} -\overline{U}_0(i)}$$

where

i is a discrete time instance starting at or after detecting the earth fault in the three-phase electric network,
m is a start index number corresponding to discrete time instance t1, k is an index number corresponding to discrete time instance tk occurring after time instance t1,
$3 \cdot \overline{I}_{0L}$ is the residual current at the first point of the three-phase electric connection such that a positive current flow is towards the second point of the three-phase electric connection,
$3 \cdot \overline{I}_{0R}$ is the residual current at the second point of the three-phase electric connection such that a positive current flow is towards the first point of the three-phase electric connection, and
$\overline{U}_0$ is the residual voltage of the three-phase electric connection.

4. A method as claimed in claim 2 or 3, wherein the value for the operate quantity is based only on a fundamental frequency component of the residual current at the first point of the three-phase electric connection (20), the residual current at the second point of the three-phase electric connection (20), and the residual voltage of the three-phase electric connection (20).

5. A method as claimed in claim 2 or 3, wherein the value for the operate quantity is based on a fundamental frequency components and at least one harmonic frequency component of the residual current at the first point of the three-phase electric connection (20), the residual current at the second point of the three-phase electric connection (20), and the residual voltage of the three-phase electric connection (20).

6. A method as claimed in any one of claims 1 to 5, comprising operating earth-fault protection of the three-phase electric connection (20) in response to determining that the detected earth fault is in the three-phase electric connection (20) between the first point and the second point of the three-phase electric connection (20).

7. A method as claimed in claim 6, wherein the operating of the earth-fault protection comprises:

tripping one or more switching devices (21A, 21B) in the three-phase electric network (200) and/or preventing a tripping of one or more switching devices in the three-phase electric network (200); and/or switching off or limiting the earth-fault current of the detected phase-to-earth fault in the three-phase electric connection (20).

8. A computer program product comprising computer program code, wherein the execution of the program code in a computer causes the computer to carry out the steps of the method according to any one of claims 1 to 7.

9. An apparatus for use in differential protection of a three-phase electric connection of a three-phase electric network, the apparatus (100A, 100B) comprising:

means (10A, 10B) configured to determine a value for an operate quantity in response to detecting an earth fault in the three-phase electric network (200) or in response to receiving an indication of an earth fault in the three-phase electric network (200), wherein the means configured to determine the value for the operate quantity are configured to:

b1) form a cumulative phasor sum of at least two values, determined at different instants of time, of an electric phasor quantity, wherein the electric phasor quantity is based on a residual current at a first point of the three-phase electric connection (20), a residual current at a second point of the three-phase electric connection (20), and a residual voltage of the three-phase electric connection (20), or quantities indicative thereof; and set the cumulative phasor sum as the value for the operate quantity,
or
b2) form a first cumulative phasor sum of at least two values, determined at different instants of time, of a first electric phasor quantity, wherein the first electric phasor quantity is based on the residual current at the first point of the three-phase electric connection (20) and the residual current at the second point of the three-phase electric connection (20), or quantities indicative thereof; form a second cumulative phasor sum of at least two values, determined at different instants of time, of a second electric phasor quantity, wherein the second electric phasor quantity is based on the residual voltage of the three-phase electric connection (20), or a quantity indicative thereof; and set a quotient of the first cumulative phasor sum and the second cumulative phasor sum as the value for the operate quantity;

means (10A, 10B) configured to compare the determined value for the operate quantity with one or more thresholds or an operation characteristic; and
means (10A, 10B) configured to determine whether the detected earth fault is in the three-phase electric connection (20) between the first point and the second point of the three-phase electric connection (20).

10. An apparatus as claimed in claim 9, wherein, as per alternative b1), the means (10A, 10B) configured to determine the value for the operate quantity are configured to determine the value for the operate quantity based on the following equation:

$$\overline{DIR}(i) = \sum_{i=m}^{k} \frac{3 \cdot \overline{I}_{0L}(i) + 3 \cdot \overline{I}_{0R}(i)}{-\overline{U}_0(i)}$$

where

i is a discrete time instance starting at or after detecting the earth fault in the three-phase electric network,
m is a start index number corresponding to discrete time instance t1, k is an index number corresponding to discrete time instance tk occurring after time instance t1,
$3 \cdot \overline{I}_{0L}$ is the residual current at the first point of the three-phase electric connection such that a positive current flow is towards the second point of the three-phase electric connection,
$3 \cdot \overline{I}_{0R}$ is the residual current at the second point of the three-phase electric connection such that a positive current flow is towards the first point of the three-phase electric connection, and
$\overline{U}_0$ is the residual voltage of the three-phase electric connection.

11. A method as claimed in claim 9 or 10, wherein, as per alternative b2), the means (10A, 10B) configured to determine the value for the operate quantity are configured to determine the value for the operate quantity based on the following equation:

$$\overline{MS}(i) = \frac{\sum_{i=m}^{k}(3 \cdot \overline{I}_{0L}(\mathrm{i}) + 3 \cdot \overline{I}_{0R}(\mathrm{i}))}{\sum_{i=m}^{k} -\overline{U}_0(\mathrm{i})}$$

where

i is a discrete time instance starting at or after detecting the earth fault in the three-phase electric network,
m is a start index number corresponding to discrete time instance t1, k is an index number corresponding to discrete time instance tk occurring after time instance t1,
$3 \cdot \overline{I}_{0L}$ is the residual current at the first point of the three-phase electric connection such that a positive current flow is towards the second point of the three-phase electric connection,
$3 \cdot \overline{I}_{0R}$ is the residual current at the second point of the three-phase electric connection such that a positive current flow is towards the first point of the three-phase electric connection, and
$\overline{U}_0$ is the residual voltage of the three-phase electric connection.

12. An apparatus as claimed in claim 10 or 11, wherein the value for the operate quantity is based only on a fundamental frequency component of the residual current at the first point of the three-phase electric connection (20), the residual current at the second point of the three-phase electric connection (20), and the residual voltage of the three-phase electric connection (20).

13. An apparatus as claimed in claim 10 or 11, wherein the value for the operate quantity is based on a fundamental frequency components and at least one harmonic frequency component of the residual current at the first point of the three-phase electric connection (20), the residual current at the second point of the three-phase electric connection (20), and the residual voltage of the three-phase electric connection (20).

14. An apparatus as claimed in any one of claims 9 to 13, comprising means (10A, 10B) configured to operate earth-fault protection of the three-phase electric connection (20) in response to determining that the detected earth fault is in the three-phase electric connection (20) between the first point and the second point of the three-phase electric connection (20).

15. An apparatus as claimed in claim 14, wherein the operating of the earth-fault protection comprises:

tripping one or more switching devices in the three-phase electric network (200) and/or preventing a tripping of one or more switching devices in the three-phase electric network (200); and/or
switching off or limiting the earth-fault current of the detected phase-to-earth fault in the three-phase electric connection (20).

**Patentansprüche**

1. Verfahren für einen differenziellen Schutz einer dreiphasigen elektrischen Verbindung eines dreiphasigen elektrischen Netzes, wobei das Verfahren umfasst:

a) Erkennen eines Erdungsfehlers in dem dreiphasigen elektrischen Netz (200);

b) als Reaktion auf das Erkennen des Erdungsfehlers in dem dreiphasigen elektrischen Netz (200), Ermitteln eines Werts für eine Betriebsgröße, wobei das Ermitteln umfasst:

b1) Bilden einer kumulativen Phasorsumme aus mindestens zwei Werten einer elektrischen Phasorgröße, die zu unterschiedlichen Zeitpunkten ermittelt wurden, wobei die elektrische Phasorgröße auf einem Reststrom an einem ersten Punkt der dreiphasigen elektrischen Verbindung (20), einem Reststrom an einem zweiten Punkt der dreiphasigen elektrischen Verbindung (20) und einer Restspannung der dreiphasigen elektrischen Verbindung (20), oder auf Größen beruht, die diese anzeigen; und Einstellen der kumulativen Phasorsumme als den Wert für die Betriebsgröße,

oder

b2) Bilden einer ersten kumulativen Phasorsumme aus mindestens zwei Werten einer ersten elektrischen Phasorgröße, die zu unterschiedlichen Zeitpunkten ermittelt wurden, wobei die erste elektrische Phasorgröße auf dem Reststrom an dem ersten Punkt der dreiphasigen elektrischen Verbindung (20) und dem Reststrom an dem zweiten Punkt der dreiphasigen elektrischen Verbindung (20) oder auf Größen beruht, die diese anzeigen; Bilden einer zweiten kumulativen Phasorsumme aus mindestens zwei Werten einer zweiten elektrischen Phasorgröße, die zu unterschiedlichen Zeitpunkten ermittelt wurden, wobei die zweite elektrische Phasorgröße auf der Restspannung der dreiphasigen elektrischen Verbindung (20) oder auf Größen beruht, die diese anzeigen; und Einstellen eines Quotienten der ersten kumulativen Phasorsumme und der zweiten kumulativen Phasorsumme als den Wert für die Betriebsgröße;

c) Vergleichen des ermittelten Werts für die Betriebsgröße mit einem oder mehreren Schwellenwerten oder einer Betriebseigenschaft; und

d) Ermitteln, auf der Grundlage des Vergleichens, ob der erkannte Erdungsfehler in der dreiphasigen elektrischen Verbindung (20) zwischen dem ersten Punkt und dem zweiten Punkt der dreiphasigen elektrischen Verbindung (20) liegt.

2. Verfahren nach Anspruch 1, wobei der Wert für die Betriebsgröße gemäß der Alternative b1) basierend auf der folgenden Gleichung ermittelt wird:

$$\overline{DIR}(i) = \sum_{i=m}^{k} \frac{3 \cdot \bar{I}_{0L}(i) + 3 \cdot \bar{I}_{0R}(i)}{-\overline{U}_0(i)}$$

wobei

i eine diskrete Zeitinstanz ist, die beim oder nach dem Erkennen des Erdungsfehlers in dem dreiphasigen elektrischen Netz startet,

m eine Startindexzahl ist, die der diskreten Zeitinstanz t1 entspricht,

keine Indexzahl ist, die der diskreten Zeitinstanz tk entspricht, die nach der Zeitinstanz t1 auftritt,

$3 \cdot \bar{I}_{0L}$ der Reststrom an dem ersten Punkt der dreiphasigen elektrischen Verbindung ist, sodass ein positiver Stromfluss in Richtung auf den zweiten Punkt der dreiphasigen elektrischen Verbindung erfolgt,

$3 \cdot \bar{I}_{0R}$ der Reststrom an dem zweiten Punkt der dreiphasigen elektrischen Verbindung ist, sodass ein positiver Stromfluss in Richtung auf den ersten Punkt der dreiphasigen elektrischen Verbindung erfolgt, und

$\overline{U}_0$ die Restspannung der dreiphasigen elektrischen Verbindung ist.

3. Verfahren nach Anspruch 1 oder 2, wobei der Wert für die Betriebsgröße gemäß der Alternative b2) basierend auf der folgenden Gleichung ermittelt wird:

$$\overline{MS}(i) = \frac{\sum_{i=m}^{k}(3 \cdot \bar{I}_{0L}(i) + 3 \cdot \bar{I}_{0R}(i))}{\sum_{i=m}^{k} -\overline{U}_0(i)}$$

wobei

i eine diskrete Zeitinstanz ist, die beim oder nach dem Erkennen des Erdungsfehlers in dem dreiphasigen elektrischen Netz startet,

m eine Startindexzahl ist, die der diskreten Zeitinstanz t1 entspricht,

keine Indexzahl ist, die der diskreten Zeitinstanz tk entspricht, die nach der Zeitinstanz t1 auftritt,

$3 \cdot \overline{I}_{0L}$ der Reststrom an dem ersten Punkt der dreiphasigen elektrischen Verbindung ist, sodass ein positiver Stromfluss in Richtung auf den zweiten Punkt der dreiphasigen elektrischen Verbindung erfolgt,

$3 \cdot \overline{I}_{0R}$ der Reststrom an dem zweiten Punkt der dreiphasigen elektrischen Verbindung ist, sodass ein positiver Stromfluss in Richtung auf den ersten Punkt der dreiphasigen elektrischen Verbindung erfolgt, und

$\overline{U}_0$ die Restspannung der dreiphasigen elektrischen Verbindung ist.

4. Verfahren nach Anspruch 2 oder 3, wobei der Wert für die Betriebsgröße nur auf einer Grundfrequenzkomponente des Reststroms an dem ersten Punkt der dreiphasigen elektrischen Verbindung (20), des Reststroms an dem zweiten Punkt der dreiphasigen elektrischen Verbindung (20) und der Restspannung der dreiphasigen elektrischen Verbindung (20) beruht.

5. Verfahren nach Anspruch 2 oder 3, wobei der Wert für die Betriebsgröße nur auf einer Grundfrequenzkomponente des Reststroms und mindestens einer Oberwellenfrequenzkomponente des Reststroms an dem ersten Punkt der dreiphasigen elektrischen Verbindung (20), des Reststroms an dem zweiten Punkt der dreiphasigen elektrischen Verbindung (20) und der Restspannung der dreiphasigen elektrischen Verbindung (20) beruht.

6. Verfahren nach einem der Ansprüche 1 bis 5, das ein Betreiben eines Erdungsfehlerschutzes der dreiphasigen elektrischen Verbindung (20) als Reaktion auf ein Ermitteln, dass der erkannte Erdungsfehler in der dreiphasigen elektrischen Verbindung (20) zwischen dem ersten Punkt und dem zweiten Punkt der dreiphasigen elektrischen Verbindung (20) liegt.

7. Verfahren nach Anspruch 6, wobei das Betreiben des Erdungsfehlerschutzes umfasst:

Auslösen einer oder mehrerer Schalteinrichtungen (21A, 21B) in dem dreiphasigen elektrischen Netz (200) und/oder Verhindern eines Auslösens einer oder mehrerer Schalteinrichtungen in dem dreiphasigen elektrischen Netz (200); und/oder

Ausschalten oder Begrenzen des Erdungsfehlerstroms des erkannten Phase-Erdung-Fehlers in der dreiphasigen elektrischen Verbindung (20).

8. Computerprogrammprodukt, das einen Computerprogrammcode umfasst, wobei das Ausführen des Programmcodes in einem Computer, den Computer veranlasst, die Schritte des Verfahrens nach einem der Ansprüche 1 bis 7 auszuführen.

9. Vorrichtung für einen differenziellen Schutz einer dreiphasigen elektrischen Verbindung eines dreiphasigen elektrischen Netzes, wobei die Vorrichtung (100A, 100B) umfasst:

ein Element (10A, 10B), das konfiguriert ist zum Ermitteln eines Werts für eine Betriebsgröße als Reaktion auf ein Erkennen eines Erdungsfehlers in dem dreiphasigen elektrischen Netz (200) oder als Reaktion auf ein Empfangen einer Anzeige eines Erdungsfehlers in dem dreiphasigen elektrischen Netz (200), wobei das Element, das konfiguriert ist zum Ermitteln des Werts für die Betriebsgröße, konfiguriert ist zum:

b1) Bilden einer kumulativen Phasorsumme aus mindestens zwei Werten einer elektrischen Phasorgröße, die zu unterschiedlichen Zeitpunkten ermittelt wurden, wobei die elektrische Phasorgröße auf einem Reststrom an einem ersten Punkt der dreiphasigen elektrischen Verbindung (20), einem Reststrom an einem zweiten Punkt der dreiphasigen elektrischen Verbindung (20) und einer Restspannung der dreiphasigen elektrischen Verbindung (20), oder auf Größen beruht, die diese anzeigen; und Einstellen der kumulativen Phasorsumme als den Wert für die Betriebsgröße,

oder

b2) Bilden einer ersten kumulativen Phasorsumme aus mindestens zwei Werten einer ersten elektrischen Phasorgröße, die zu unterschiedlichen Zeitpunkten ermittelt wurden, wobei die erste elektrische Phasorgröße auf dem Reststrom an einem ersten Punkt der dreiphasigen elektrischen Verbindung (20) und dem Reststrom an einem zweiten Punkt der dreiphasigen elektrischen Verbindung (20) oder auf Größen beruht, die diese anzeigen; Bilden einer zweiten kumulativen Phasorsumme aus mindestens zwei Werten einer zweiten elektrischen Phasorgröße, die zu unterschiedlichen Zeitpunkten ermittelt wurden, wobei die zweite elektrische Phasorgröße auf der Restspannung der dreiphasigen elektrischen Verbindung (20) oder auf Größen beruht, die diese anzeigen; und Einstellen eines Quotienten der ersten kumulativen Phasorsumme und der zweiten kumulativen Phasorsumme als den Wert für die Betriebsgröße;

ein Element (10A, 10B) das konfiguriert ist zum Vergleichen des ermittelten Werts für die Betriebsgröße mit einem oder mehreren Schwellenwerten oder einer Betriebseigenschaft; und

ein Element (10A, 10B) das konfiguriert ist zum Ermitteln, ob der erkannte Erdungsfehler in der dreiphasigen elektrischen Verbindung (20) zwischen dem ersten Punkt und dem zweiten Punkt der dreiphasigen elektrischen Verbindung (20) liegt.

10. Vorrichtung nach Anspruch 9, wobei das Element (10A, 10B), das gemäß der Alternative b1) konfiguriert ist zum Ermitteln des Werts für die Betriebsgröße, konfiguriert ist zum Ermitteln des Werts für die Betriebsgröße basierend auf der folgenden Gleichung:

$$\overline{DIR}(i) = \sum_{i=m}^{k} \frac{3 \cdot \overline{I}_{0L}(i) + 3 \cdot \overline{I}_{0R}(i)}{-\overline{U}_0(i)}$$

wobei

i eine diskrete Zeitinstanz ist, die beim oder nach dem Erkennen des Erdungsfehlers in dem dreiphasigen elektrischen Netz startet,

m eine Startindexzahl ist, die der diskreten Zeitinstanz t1 entspricht,

keine Indexzahl ist, die der diskreten Zeitinstanz tk entspricht, die nach der Zeitinstanz t1 auftritt,

$3 \cdot \overline{I}_{0L}$ der Reststrom an dem ersten Punkt der dreiphasigen elektrischen Verbindung ist, sodass ein positiver Stromfluss in Richtung auf den zweiten Punkt der dreiphasigen elektrischen Verbindung erfolgt,

$3 \cdot \overline{I}_{0R}$ der Reststrom an dem zweiten Punkt der dreiphasigen elektrischen Verbindung ist, sodass ein positiver Stromfluss in Richtung auf den ersten Punkt der dreiphasigen elektrischen Verbindung erfolgt, und

$\overline{U}_0$ die Restspannung der dreiphasigen elektrischen Verbindung ist.

11. Verfahren nach Anspruch 9 oder 10, wobei das Element (10A, 10B), das gemäß der Alternative b2) konfiguriert ist zum Ermitteln des Werts für die Betriebsgröße, konfiguriert ist zum Ermitteln des Werts für die Betriebsgröße basierend auf der folgenden Gleichung:

$$\overline{MS}(i) = \frac{\sum_{i=m}^{k}(3 \cdot \overline{I}_{0L}(i) + 3 \cdot \overline{I}_{0R}(i))}{\sum_{i=m}^{k} -\overline{U}_0(i)}$$

wobei

i eine diskrete Zeitinstanz ist, die beim oder nach dem Erkennen des Erdungsfehlers in dem dreiphasigen elektrischen Netz startet,

m eine Startindexzahl ist, die der diskreten Zeitinstanz t1 entspricht,

keine Indexzahl ist, die der diskreten Zeitinstanz tk entspricht, die nach der Zeitinstanz t1 auftritt,

$3 \cdot \overline{I}_{0L}$ der Reststrom an dem ersten Punkt der dreiphasigen elektrischen Verbindung ist, sodass ein positiver Stromfluss in Richtung auf den zweiten Punkt der dreiphasigen elektrischen Verbindung erfolgt,

$3 \cdot \overline{I}_{0R}$ der Reststrom an dem zweiten Punkt der dreiphasigen elektrischen Verbindung ist, sodass ein positiver Stromfluss in Richtung auf den ersten Punkt der dreiphasigen elektrischen Verbindung erfolgt, und

$\overline{U}_0$ die Restspannung der dreiphasigen elektrischen Verbindung ist.

12. Vorrichtung nach Anspruch 10 oder 11, wobei der Wert für die Betriebsgröße nur auf einer Grundfrequenzkomponente des Reststroms an dem ersten Punkt der dreiphasigen elektrischen Verbindung (20), des Reststroms an dem zweiten Punkt der dreiphasigen elektrischen Verbindung (20) und der Restspannung der dreiphasigen elektrischen Verbindung (20) beruht.

13. Vorrichtung nach Anspruch 10 oder 11, wobei der Wert für die Betriebsgröße nur auf einer Grundfrequenzkomponente des Reststroms und mindestens einer Oberwellenfrequenzkomponente des Reststroms an dem ersten Punkt der dreiphasigen elektrischen Verbindung (20), des Reststroms an dem zweiten Punkt der dreiphasigen elektrischen Verbindung (20) und der Restspannung der dreiphasigen elektrischen Verbindung (20) beruht.

14. Vorrichtung nach einem der Ansprüche 9 bis 13, die ein Element (10A, 10B) umfasst, das konfiguriert ist zum Betreiben eines Erdungsfehlerschutzes der dreiphasigen elektrischen Verbindung (20) als Reaktion auf ein Ermitteln, dass der erkannte Erdungsfehler in der dreiphasigen elektrischen Verbindung (20) zwischen dem ersten Punkt und dem zweiten Punkt der dreiphasigen elektrischen Verbindung (20) liegt.

15. Vorrichtung nach Anspruch 14, wobei das Betreiben des Erdungsfehlerschutzes umfasst:

Auslösen einer oder mehrerer Schalteinrichtungen in dem dreiphasigen elektrischen Netz (200) und/oder Verhindern eines Auslösens einer oder mehrerer Schalteinrichtungen in dem dreiphasigen elektrischen Netz (200); und/oder
Ausschalten oder Begrenzen des Erdungsfehlerstroms des erkannten Phase-Erdung-Fehlers in der dreiphasigen elektrischen Verbindung (20).


**Revendications**

1. Procédé de protection différentielle d'une connexion électrique triphasée d'un réseau électrique triphasé, le procédé comprenant :

a) la détection d'un défaut à la terre dans le réseau électrique triphasé (200) ;
b) en réponse à la détection du défaut à la terre dans le réseau électrique triphasé (200), la détermination d'une valeur pour une grandeur de fonctionnement, la détermination comprenant :

b1) la formation d'une somme cumulative de phases d'au moins deux valeurs, déterminées à différents instants, d'une grandeur de phase électrique, la grandeur de phase électrique étant basée sur un courant résiduel en un premier point de la connexion électrique triphasée (20), un courant résiduel en un second point de la connexion électrique triphasée (20) et une tension résiduelle de la connexion électrique triphasée (20), ou des grandeurs indicatives de ceux-ci ; et la définition de la somme cumulative de phases comme valeur pour la grandeur de fonctionnement,
ou
b2) la formation d'une première somme cumulative de phases d'au moins deux valeurs, déterminées à différents instants, d'une première grandeur de phase électrique, la première grandeur de phase électrique étant basée sur le courant résiduel au premier point de la connexion électrique triphasée (20) et le courant résiduel au second point de la connexion électrique triphasée (20), ou sur des grandeurs indicatives de ceux-ci ; la formation d'une seconde somme cumulative de phases d'au moins deux valeurs, déterminées à différents instants, d'une seconde grandeur de phase électrique, la seconde grandeur de phase électrique étant basée sur la tension résiduelle de la connexion électrique triphasée (20), ou sur une grandeur indicative de celle-ci ; et la définition d'un quotient de la première somme cumulative de phases et de la seconde somme cumulative de phases comme valeur de la grandeur de fonctionnement ;

c) la comparaison de la valeur déterminée pour la grandeur de fonctionnement avec un ou plusieurs seuils ou avec une caractéristique de fonctionnement ; et
d) la détermination, sur la base de la comparaison, si le défaut à la terre détecté se trouve dans la connexion électrique triphasée (20) entre le premier point et le second point de la connexion électrique triphasée (20).

2. Procédé selon la revendication 1, selon la variante b1), la valeur de la grandeur de fonctionnement étant déterminée sur la base de l'équation suivante :

$$\overline{DIR}(i) = \sum_{i=m}^{k} \frac{3 \cdot \bar{I}_{0L}(i) + 3 \cdot \bar{I}_{0R}(i)}{-\bar{U}_0(i)}$$

avec

EP 4 322 354 B1

i étant une instance temporelle discrète commençant à ou après la détection du défaut à la terre dans le réseau électrique triphasé,

m étant un numéro d'index de départ correspondant à l'instance de temps discret t1,

k étant un numéro d'index correspondant à l'instance de temps discret tk survenant après l'instance de temps t1,

$3 \cdot \overline{I}_{0L}$ étant le courant résiduel au premier point de la connexion électrique triphasée tel qu'un flux de courant positif est dirigé vers le second point de la connexion électrique triphasée,

$3 \cdot \overline{I}_{0R}$ étant le courant résiduel au second point de la connexion électrique triphasée tel qu'un courant positif est dirigé vers le premier point de la connexion électrique triphasée, et

$\overline{U}_0$ étant la tension résiduelle de la connexion électrique triphasée.

3. Procédé selon la revendication 1 ou 2, selon la variante b2), la valeur de la grandeur de fonctionnement étant déterminée sur la base de l'équation suivante :

$$\overline{MS}(i) = \frac{\sum_{i=m}^{k}(3 \cdot \overline{I}_{0L}(i) + 3 \cdot \overline{I}_{0R}(i))}{\sum_{i=m}^{k} -\overline{U}_0(i)}$$

avec

i étant une instance temporelle discrète commençant à ou après la détection du défaut à la terre dans le réseau électrique triphasé,

m étant un numéro d'index de départ correspondant à l'instance de temps discret t1,

k étant un numéro d'index correspondant à l'instance de temps discret tk survenant après l'instance de temps t1,

$3 \cdot \overline{I}_{0L}$ étant le courant résiduel au premier point de la connexion électrique triphasée tel qu'un flux de courant positif est dirigé vers le second point de la connexion électrique triphasée,

$3 \cdot \overline{I}_{0R}$ étant le courant résiduel au second point de la connexion électrique triphasée tel qu'un courant positif est dirigé vers le premier point de la connexion électrique triphasée, et

$\overline{U}_0$ étant la tension résiduelle de la connexion électrique triphasée.

4. Procédé selon la revendication 2 ou 3, la valeur de la grandeur de fonctionnement étant basée uniquement sur une composante de fréquence fondamentale du courant résiduel au premier point de la connexion électrique triphasée (20), du courant résiduel au second point de la connexion électrique triphasée (20) et de la tension résiduelle de la connexion électrique triphasée (20).

5. Procédé selon la revendication 2 ou 3, la valeur de la grandeur de fonctionnement étant basée sur une composante de fréquence fondamentale et au moins une composante de fréquence harmonique du courant résiduel au premier point de la connexion électrique triphasée (20), du courant résiduel au second point de la connexion électrique triphasée (20) et de la tension résiduelle de la connexion électrique triphasée (20).

6. Procédé selon l'une quelconque des revendications 1 à 5, comprenant le fonctionnement de la protection contre les défauts à la terre de la connexion électrique triphasée (20) en réponse à la détermination que le défaut à la terre détecté se trouve dans la connexion électrique triphasée (20) entre le premier point et le second point de la connexion électrique triphasée (20).

7. Procédé selon la revendication 6, le fonctionnement de la protection contre les défauts à la terre comprenant :

le déclenchement d'un ou plusieurs dispositifs de commutation (21A, 21B) dans le réseau électrique triphasé (200) et/ou la prévention d'un déclenchement d'un ou plusieurs dispositifs de commutation dans le réseau électrique triphasé (200) ; et/ou

la mise hors tension ou la limitation du courant de défaut à la terre du défaut phase-terre détecté dans la connexion électrique triphasée (20).

8. Produit de programme informatique comprenant un code de programme informatique, l'exécution du code de programme sur un ordinateur entraînant l'exécution par l'ordinateur des étapes du procédé selon l'une quelconque des revendications 1 à 7.

9. Appareil destiné à la protection différentielle d'une connexion électrique triphasée d'un réseau électrique triphasé, l'appareil (100A, 100B) comprenant :

des moyens (10A, 10B) configurés pour déterminer une valeur pour une grandeur de fonctionnement en réponse à la détection d'un défaut à la terre dans le réseau électrique triphasé (200) ou en réponse à la réception d'une indication d'un défaut à la terre dans le réseau électrique triphasé (200), les moyens configurés pour déterminer la valeur pour la grandeur de fonctionnement étant configurés pour :

b1) former une somme cumulative de phases d'au moins deux valeurs, déterminées à différents instants, d'une grandeur de phase électrique, la grandeur de phase électrique étant basée sur un courant résiduel en un premier point de la connexion électrique triphasée (20), un courant résiduel en un second point de la connexion électrique triphasée (20) et une tension résiduelle de la connexion électrique triphasée (20), ou des grandeurs indicatives de ceux-ci ; et définir la somme cumulative de phases comme valeur pour la grandeur de fonctionnement,
ou
b2) former une première somme cumulative de phases d'au moins deux valeurs, déterminées à différents instants, d'une première grandeur de phase électrique, la première grandeur de phase électrique étant basée sur le courant résiduel au premier point de la connexion électrique triphasée (20) et le courant résiduel au second point de la connexion électrique triphasée (20), ou sur des grandeurs indicatives de ceux-ci ; former une seconde somme cumulative de phases d'au moins deux valeurs, déterminées à différents instants, d'une seconde grandeur de phase électrique, la seconde grandeur de phase électrique étant basée sur la tension résiduelle de la connexion électrique triphasée (20), ou une grandeur indicative de celle-ci ; et définir un quotient de la première somme cumulative de phases et de la seconde somme cumulative de phases comme valeur de la grandeur de fonctionnement ;

des moyens (10A, 10B) configurés pour comparer la valeur déterminée pour la grandeur de fonctionnement avec un ou plusieurs seuils ou avec une caractéristique de fonctionnement ; et
des moyens (10A, 10B) configurés pour déterminer si le défaut à la terre détecté se trouve dans la connexion électrique triphasée (20) entre le premier point et le second point de la connexion électrique triphasée (20).

10. Appareil selon la revendication 9, selon la variante b1), les moyens (10A, 10B) configurés pour déterminer la valeur de la grandeur de fonctionnement étant configurés pour déterminer la valeur de la grandeur de fonctionnement sur la base de l'équation suivante :

$$\overline{DIR}(i) = \sum_{i=m}^{k} \frac{3 \cdot \overline{I}_{0L}(i) + 3 \cdot \overline{I}_{0R}(i)}{-\overline{U}_0(i)}$$

avec

i étant une instance temporelle discrète commençant à ou après la détection du défaut à la terre dans le réseau électrique triphasé,
m étant un numéro d'index de départ correspondant à l'instance de temps discret t1,
k étant un numéro d'index correspondant à l'instance de temps discret tk survenant après l'instance de temps t1,
$3 \cdot \overline{I}_{0L}$ étant le courant résiduel au premier point de la connexion électrique triphasée tel qu'un flux de courant positif est dirigé vers le second point de la connexion électrique triphasée,
$3 \cdot \overline{I}_{0R}$ étant le courant résiduel au second point de la connexion électrique triphasée tel qu'un courant positif est dirigé vers le premier point de la connexion électrique triphasée, et
$\overline{U}_0$ étant la tension résiduelle de la connexion électrique triphasée.

11. Procédé selon la revendication 9 ou 10, selon la variante b2), les moyens (10A, 10B) configurés pour déterminer la valeur de la grandeur de fonctionnement étant configurés pour déterminer la valeur de la grandeur de fonctionnement sur la base de l'équation suivante :

$$\overline{MS}(i) = \frac{\sum_{i=m}^{k} (3 \cdot \overline{I}_{0L}(i) + 3 \cdot \overline{I}_{0R}(i))}{\sum_{i=m}^{k} -\overline{U}_0(i)}$$

avec

i étant une instance temporelle discrète commençant à ou après la détection du défaut à la terre dans le réseau électrique triphasé,

m étant un numéro d'index de départ correspondant à l'instance de temps discret t1,

k étant un numéro d'index correspondant à l'instance de temps discret tk survenant après l'instance de temps t1,

$3 \cdot \bar{I}_{0L}$ étant le courant résiduel au premier point de la connexion électrique triphasée tel qu'un flux de courant positif est dirigé vers le second point de la connexion électrique triphasée,

$3 \cdot \bar{I}_{0R}$ étant le courant résiduel au second point de la connexion électrique triphasée tel qu'un courant positif est dirigé vers le premier point de la connexion électrique triphasée, et

$\bar{U}_0$ étant la tension résiduelle de la connexion électrique triphasée.

12. Appareil selon la revendication 10 ou 11, la valeur de la grandeur de fonctionnement étant basée uniquement sur une composante de fréquence fondamentale du courant résiduel au premier point de la connexion électrique triphasée (20), du courant résiduel au second point de la connexion électrique triphasée (20) et de la tension résiduelle de la connexion électrique triphasée (20).

13. Appareil selon la revendication 10 ou 11, la valeur de la grandeur de fonctionnement étant basée sur une composante de fréquence fondamentale et au moins une composante de fréquence harmonique du courant résiduel au premier point de la connexion électrique triphasée (20), du courant résiduel au second point de la connexion électrique triphasée (20) et de la tension résiduelle de la connexion électrique triphasée (20).

14. Appareil selon l'une quelconque des revendications 9 à 13, comprenant des moyens (10A, 10B) configurés pour faire fonctionner la protection contre les défauts à la terre de la connexion électrique triphasée (20) en réponse à la détermination que le défaut à la terre détecté se trouve dans la connexion électrique triphasée (20) entre le premier point et le second point de la connexion électrique triphasée (20).

15. Appareil selon la revendication 14, le fonctionnement de la protection contre les défauts à la terre comprenant :

le déclenchement d'un ou plusieurs dispositifs de commutation dans le réseau électrique triphasé (200) et/ou la prévention d'un déclenchement d'un ou plusieurs dispositifs de commutation dans le réseau électrique triphasé (200) ; et/ou

la mise hors tension ou la limitation du courant de défaut à la terre du défaut phase-terre détecté dans la connexion électrique triphasée (20).

[ °
  °  = LINE DIFFERENTIAL PROTECTION
  ° ]

Fig. 1

Fig. 2

Fig. 3

EP 4 322 354 B1

Fig. 4

Fig. 5

Im

Margin for
cumulative
error

Fig. 6

Boundary
line 2

FORWARD

OPERATION
DIRECTION

beta

Operate sector
width

NON-
OPERATION
DIRECTION

REVERSE

Re

Boundary
line 1

alpha

Margin for
cumulative
error

Im

$\overline{MS}(t1)$
$\overline{MS}(t2)$
$\overline{MS}(t3)$
$\overline{MS}(t4)$
$\overline{MS}(t5)$

Fig. 7

Re

**Fig. 8**

**EP 4 322 354 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2375525 A1
- CN 101478147
- EP 2088659 A
- JP S57148521 B
- JP S57142119 B